# EUROPEAN PATENT SPECIFICATION

(11) **EP 4 586 009 B1**
(45) Date of publication and mention of the grant of the patent: **02.12.2026**
(21) Application number: 23907319.0
(22) Date of filing: 04.10.2023
(51) Int. Cl.: G03B 21/20, G03B 37/02, G02B 5/04, G03B 21/14, G03B 21/28, G03B 21/56

(54) **ELECTRONIC DEVICE CAPABLE OF PROJECTING IMAGE**
ELEKTRONISCHE VORRICHTUNG ZUR PROJEKTION EINES BILDES
DISPOSITIF ÉLECTRONIQUE CAPABLE DE PROJETER UNE IMAGE

(30) Priority: 23.12.2022 KR 20220183645
(43) Date of publication of application: 16.07.2025
(73) Proprietor: Samsung Electronics Co., Ltd., Suwon-si, Gyeonggi-do 16677 (KR)
(72) Inventor: KIM, Kyunghwan, Suwon-si Gyeonggi-do 16677 (KR); HUR, Jean, Suwon-si Gyeonggi-do 16677 (KR)
(74) Representative: Walaski, Jan Filip
(86) International application number: PCT/KR2023/015222
(87) International publication number: WO 2024/136033

(56) References cited:
- CN-A- 101 546 041
- JP-A- 2000 075 404
- JP-A- 2004 279 847
- JP-A- 2016 218 458
- JP-A- 2022 107 983
- KR-A- 20090 073 303
- KR-A- 20120 131 359
- US-A1- 2018 196 270
- US-B2- 9 563 113

## Description

### [Technical Field]

The disclosure relates to an electronic device capable of projecting images.

### [Background Art]

Electronic devices capable of projecting images on a screen or a wall are widely used.

An example of an electronic device capable of projecting images is a projector.

The projector may include one light source, one image former, and a projection lens. Accordingly, when light is emitted from the light source, an image formed by the image former may be projected onto a screen or a wall through the projection lens.

Two projectors are used to form a wide image that is wider than an image that can be projected by a single projector.

For example, by installing two projectors side by side, it is possible to display two images or a wide image in which two images are connected on a single screen. Prior art is represented by JP 2022 107983 A.

### [Disclosure of Invention]

### [Technical Solution]

An electronic device according to one or more embodiments of the disclosure may include a first light source configured to emit a first light; a second light source disposed parallel to the first light source and configured to emit a second light; a total internal reflection prism disposed in front of the first light source and the second light source and configured to refract the first light and the second light; a first image former disposed adjacent to a first surface of the total internal reflection prism, and configured to form the first light refracted by the total internal reflection prism as a first image light and reflect the first image light to the total internal reflection prism so that the total internal reflection prism emits the first image light; a second image former disposed adjacent to the first surface of the total internal reflection prism and parallel to the first image former, and configured to form the second light refracted by the total internal reflection prism as a second image light and reflect the second image light to the total internal reflection prism so that the total internal reflection prism emits the second image light; a beam reducer prism configured to adjust a distance between the first image light and the second image light emitted from the total internal reflection prism; and a projection lens configured to project the distance adjusted first image light and second image light onto a screen.

The beam reducer prism may be configured to adjust the distance between the first image light and the second image light so that the distance adjusted first image light and second image light form one of a single image, a wide image, and dual images on the screen.

The beam reducer prism may include: a fixed prism adjacent to an exit surface of the total internal reflection prism; a moving prism spaced apart from the fixed prism; and a moving device configured to linearly move the moving prism with respect to the fixed prism.

The moving prism is positionable in a first position where the distance adjusted first image light and second image light form a single image on the screen, a second position where the distance adjusted first image light and second image light form dual images on the screen, and a third position where the distance adjusted first image light and second image light form a wide image on the screen.

The third position may be located between the first position and the second position.

The fixed prism may include a first fixed prism and a second fixed prism spaced apart from the first fixed prism. Each of the first fixed prism and the second fixed prism may be a right-angled triangular pillar. The first fixed prism and the second fixed prism may be arranged in an isosceles triangular shape with a base side parallel to the exit surface of the total internal reflection prism.

The moving prism may include a first moving prism, and a second moving prism in contact with the first moving prism. An inclined surface of the first moving prism may face, and may be parallel to, an inclined surface of the first fixed prism. An inclined surface of the second moving prism may face, and may be parallel to, an inclined surface of the second fixed prism.

The fixed prism and the moving prism may have an identical refractive index.

The fixed prism may be a triangular pillar having an isosceles triangular cross-section.

The moving device may include: a moving plate on which the moving prism is disposed; and a linear motion mechanism configured to linearly move the moving plate.

The first image former and the second image former may each include a digital micromirror device.

The first image former and the second image former may be disposed on a same plane.

The projection lens may include a wide-angle projection lens or an ultra-wide-angle projection lens.

The electronic device may further include a case. The first light source, the second light source, the total internal reflection prism, the beam reducer prism, and the projection lens may be disposed inside the case.

The case may include a display part configured to display a button for adjusting the beam reducer prism.

### [Brief Description of Drawings]

These and/or other aspects, features, and advantages of certain embodiments of the disclosure will be more apparent from the following description taken in conjunction with the accompanying drawings, in which:
FIG. 1 is a view illustrating an electronic device according to one or more embodiments of the disclosure.
FIG. 2 is a side view of the electronic device of FIG. 1.
FIG. 3 is a perspective view illustrating a projection optical system of an electronic device according to one or more embodiments of the disclosure.
FIG. 4 is a view illustrating an electronic device according to one or more embodiments of the disclosure.
FIG. 5 is a functional block diagram of an electronic device according to one or more embodiments of the disclosure.
FIG. 6 is a view illustrating a user interface screen of a display of an electronic device according to one or more embodiments of the disclosure.
FIG. 7A is a view illustrating a single image projected by an electronic device according to one or more embodiments of the disclosure.
FIG. 7B is a view illustrating a relationship between a fixed prism and a moving prism of the electronic device according to one or more embodiments of the disclosure that projects the single image of FIG. 7A.
FIG. 8A is a view illustrating dual images projected by an electronic device according to one or more embodiments of the disclosure.
FIG. 8B is a view illustrating a relationship between a fixed prism and a moving prism of the electronic device according to one or more embodiments of the disclosure that projects the dual images of FIG. 8A.
FIG. 9A is a view illustrating a wide image projected by an electronic device according to one or more embodiments of the disclosure.
FIG. 9B is a view illustrating a relationship between a fixed prism and a moving prism of the electronic device according to one or more embodiments of the disclosure that projects the wide image of FIG. 9A.
FIG. 10A is a view illustrating a wide image projected by an electronic device according to one or more embodiments of the disclosure.
FIG. 10B is a view illustrating a relationship between a fixed prism and a moving prism of the electronic device according to one or more embodiments of the disclosure that projects the wide image of FIG. 10A.
FIG. 11A is a view illustrating a wide image projected by an electronic device according to one or more embodiments of the disclosure.
FIG. 11B is a view illustrating a relationship between a fixed prism and a moving prism of the electronic device according to one or more embodiments of the disclosure that projects the wide image of FIG. 11A.

### [Best Mode for Carrying out the Invention]

Since the embodiments of the disclosure can apply various transformations and have various embodiments, specific embodiments will be illustrated in the drawings and described in detail in the detailed description. However, this is not intended to limit the scope to the specific embodiments, and should be understood to include various modifications, equivalents, and/or alternatives of the embodiment of the disclosure. In connection with the description of the drawings, like reference numerals may be used for like elements.

In describing the disclosure, when it is determined that a detailed description of a related known function or configuration may unnecessarily obscure the gist of the disclosure, a detailed description thereof will be omitted.

In addition, the following embodiments may be modified in many different forms, and the scope of the technical idea of the disclosure is not limited to the following embodiments. Rather, these embodiments are provided so that this disclosure will be thorough and complete, and will fully convey the spirit of the disclosure to those skilled in the art.

Terms used in this disclosure are only used to describe specific embodiments, and are not intended to limit the scope of rights. Singular expressions include plural expressions unless the context clearly dictates otherwise.

In this disclosure, expressions such as "has," "can have", "includes," or "can include" indicate the existence of a corresponding feature (e.g., numerical value, function, operation, or component such as a part) and do not preclude the existence of additional features.

In this disclosure, expressions such as "A or B," "at least one of A or/and B," or "one or more of A or/and B" may include all possible combinations of the items listed together. For example, "A or B," "at least one of A or/and B," or "one or more of A or/and B" may refer to all cases (1) including at least one A, (2) including at least one B, or (3) including both at least one A and at least one B.

Expressions such as "first," "second," "primary," or "secondary," as used in this disclosure may modify various components regardless of order and/or importance, are used only to distinguish one component from other components, and do not limit the corresponding components.

Further, terms such as 'leading end', 'rear end', 'upper side', 'lower side', 'top end', 'bottom end', etc. used in the disclosure are defined with reference to the drawings. However, the shape and position of each component are not limited by these terms.

An object of the disclosure is to provide an electronic device 1 capable of projecting a single image, dual images, and a wide image with a single device.

Hereinafter, embodiments of an electronic device 1 according to the disclosure will be described in detail with reference to the accompanying drawings.

The electronic device 1 according to one or more embodiments of the disclosure may be configured to project an image onto a screen or a wall. For example, the electronic device 1 according to one or more embodiments of the disclosure may be configured as a projector.

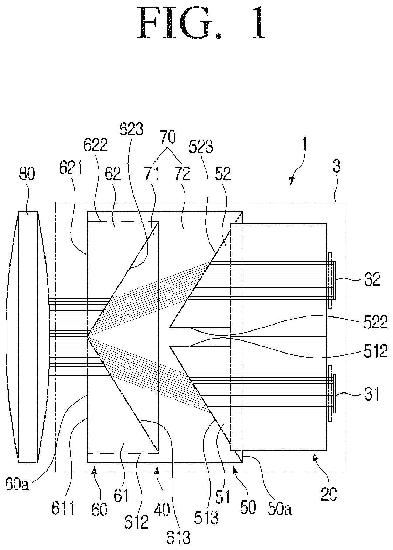

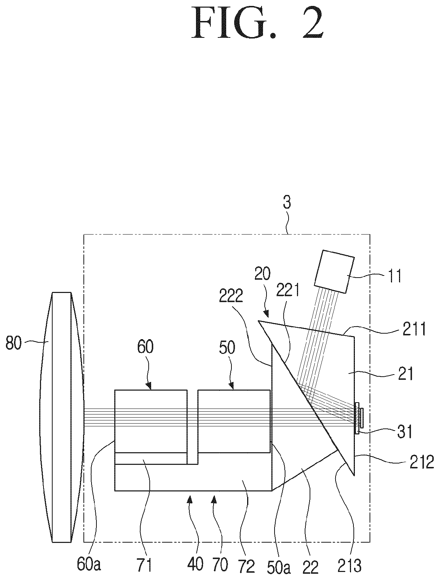

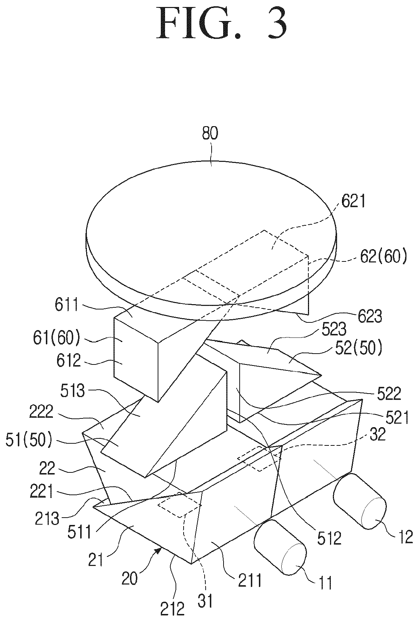

FIG. 1 is a view illustrating an electronic device 1 according to one or more embodiments of the disclosure. FIG. 2 is a side view of the electronic device 1 of FIG. 1. FIG. 3 is a perspective view illustrating a projection optical system of an electronic device 1 according to one or more embodiments of the disclosure.

Referring to FIGS. 1, 2, and 3, the electronic device 1 according to one or more embodiments of the disclosure may include a first light source 11, a second light source 12, a total internal reflection prism 20, a first image former 31, a second image former 32, a beam reducer prism 40, and a projection lens 80.

The first light source 11 may be configured to emit light. The first light source 11 may be formed of one of a light emitting diode (LED), a lamp, and a laser. The first light source 11 may include a color wheel. When the color wheel is disposed in the first light source 11, the first light source 11 may emit color light. Hereinafter, light emitted from the first light source 11 is referred to as first light.

The second light source 12 may be configured to emit light. The second light source 12 may be disposed parallel to the first light source 11. The second light source 12 may be disposed on the same plane as the first light source 11.

The second light source 12 may be formed identically to the first light source 11. For example, the second light source 12 may be formed of one of an LED, a lamp, and a laser. The second light source 12 may include a color wheel. When the color wheel is disposed in the second light source 12, the second light source 12 may emit color light. Hereinafter, light emitted from the second light source 12 is referred to as second light.

The total internal reflection (TIR) prism 20 may be disposed in front of the first light source 11 and the second light source 12. In other words, the total internal reflection prism 20 may be disposed in front of the first light source 11 and the second light source 12 in the traveling direction of the light emitted from the first light source 11 and the second light source 12.

The total internal reflection prism 20 may be formed to guide the first light and the second light emitted from the first light source 11 and the second light source 12 to the first image former 31 and the second image former 32, and to emit first image light and second image light reflected by the first image former 31 and the second image former 32 toward the beam reducer prism 40.

The total internal reflection prism 20 may include an incident surface 211 on which light emitted from the first light source 11 and the second light source 12 is incident, an image surface 212 facing the first image former 31 and the second image former 32, and an exit surface 222 from which light reflected by the first image former 31 and the second image former 32 is emitted.

The first light emitted from the image surface 212 may be reflected by the first image former 31 to become the first image light including an image, and then may be incident on the image surface 212 again. In addition, the second light emitted from the image surface 212 may be reflected by the second image former 32 to become the second image light including an image, and then may be incident on the image surface 212 again.

The incident surface 211, the image surface 212, and the exit surface 222 of the total internal reflection prism 20 may be formed on different surfaces of the total internal reflection prism 20. In detail, one surface of the total internal reflection prism 20 facing the first light source 11 and the second light source 12, that is, the incident surface 211 is different from one surface of the total internal reflection prism 20 facing the first image former 31 and the second image former 32, that is, the image surface 212. In addition, one surface of the total internal reflection prism 20 facing the first light source 11 and the second light source 12, that is, the incident surface 211 is different from one surface of the total internal reflection prism 20 from which the first image light and the second image light are emitted, that is, the exit surface 222. In addition, one surface of the total internal reflection prism 20 facing the first image former 31 and the second image former 32, that is, the image surface 212 is different from one surface of the total internal reflection prism 20 from which the first image light and the second image light are emitted, that is, the exit surface 222.

The total internal reflection prism 20 may include two prisms, that is, a first prism 21 and a second prism 22.

The first prism 21 may be formed in a triangular pillar shape. The second prism 22 may be formed in a triangular pillar shape. The first prism 21 and the second prism 22 may be disposed so that one surface of the first prism 21 and one surface of the second prism 22 contact each other.

A first surface of the first prism 21 may form the incident surface 211, and a second surface thereof may form the image surface 212. A third surface 213 of the first prism 21 may contact a first surface 221 of the second prism 22. A second surface of the second prism 22 may form the exit surface 222.

In detail, the first light source 11 and the second light source 12 may be disposed adjacent to the first surface 211 of the first prism 21, and the first image former 31 and the second image former 32 may be disposed adjacent to the second surface 212 of the first prism 21.

The first light and the second light incident on the first surface 211 of the first prism 21 are reflected on the third surface 213 of the first prism 21, and then emitted through the second surface 212 of the first prism 21. The first light and the second light emitted through the second surface 212 of the first prism 21 are reflected by the first image former 31 and the second image former 32 disposed adjacent to the second surface 212 of the first prism 21 to form the first image light and the second image light, respectively. The first image light and the second image light are incident on the second surface 212 of the first prism 21. The first image light and the second image light refer to light including images formed by the first image former 31 and the second image former 32, respectively.

The first image light and the second image light incident on the second surface 212 of the first prism 21 are incident on the first surface 221 of the second prism 22 through the third surface 213 of the first prism 21. The first image light and the second image light incident on the first surface 221 of the second prism 22 are emitted through the second surface 222 of the second prism 22.

The first image former 31 may be disposed adjacent to one surface 212 of the total internal reflection prism 20. In other words, the first image former 31 may be disposed adjacent to the image surface 212 of the total internal reflection prism 20, for example, the second surface 212 of the first prism 21.

The first image former 31 may be configured to reflect the first light emitted from the first light source 11 and refracted by the total internal reflection prism 20 to the total internal reflection prism 20. In other words, the first image former 31 may form the incident first light into a first image light including an image. A digital micromirror device may be used as the first image former 31. For example, the digital micromirror device may be formed as a DMD chip.

The second image former 32 may be disposed adjacent to one surface of the total internal reflection prism 20. The second image former 32 may be disposed parallel to the first image former 31. For example, the second image former 32 may be disposed parallel to the first image former 31 adjacent to the image surface 212 of the total internal reflection prism 20, for example, the second surface 212 of the first prism 21.

The second image former 32 may be disposed on the same plane as the first image former 31.

The second image former 32 may be configured to reflect the second light emitted from the second light source 12 and refracted by the total internal reflection prism 20 to the total internal reflection prism 20. In other words, the second image former 32 may form the incident second light into the second image light including an image. The second image former 32 may be configured in the same way as the first image former 31. A digital micromirror device may be used as the second image former 32. For example, the digital micromirror device may be formed as a DMD chip.

The beam reducer prism 40 may be configured to adjust a distance between the first image light and the second image light emitted from the total internal reflection prism 20. For example, the beam reducer prism 40 may be configured to form one of a single image, a wide image, and dual images on a screen by adjusting the distance between the first image light and the second image light.

The beam reducer prism 40 may include a fixed prism 50, a moving prism 60, and a moving device 70.

The fixed prism 50 may be disposed adjacent to the total internal reflection prism 20. The fixed prism 50 may be disposed so that the bottom surface of the fixed prism 50 faces the exit surface 222 of the total internal reflection prism 20.

The fixed prism 50 may be disposed adjacent to the exit surface 222 of the total internal reflection prism 20. For example, the fixed prism 50 may be disposed adjacent to the second surface 222 of the second prism 22. The fixed prism 50 is disposed at a predetermined distance from the exit surface 222 of the total internal reflection prism 20 and does not move relative to the total internal reflection prism 20.

The fixed prism 50 is formed to transmit the first image light and the second image light emitted from the total internal reflection prism 20. The fixed prism 50 may be formed to refract and emit the incident first and second image light.

The fixed prism 50 may be formed as two triangular pillars having a right-angled triangular cross-section, that is, two right triangular pillars. In other words, the fixed prism 50 may include a first fixed prism 51 and a second fixed prism 52. Each of the first fixed prism 51 and the second fixed prism 52 may be formed as a triangular pillar having a right-angled triangular cross-section.

The first fixed prism 51 and the second fixed prism 52 may be spaced apart from each other by a predetermined distance. The first fixed prism 51 and the second fixed prism 52 may be disposed so as not to move relative to each other. Therefore, the distance between the first fixed prism 51 and the second fixed prism 52 does not change.

The first fixed prism 51 may be disposed so that the first surface 511 thereof, that is, the rear surface is parallel to the exit surface 222 of the total internal reflection prism 20 and the second surface 512 thereof, that is, the side surface is perpendicular to the exit surface 222 of the total internal reflection prism 20. Then, the first image light emitted from the exit surface 222 of the total internal reflection prism 20 may be incident on the first surface 511 of the first fixed prism 51, and then may be emitted through the third surface 513 of the first fixed prism 51, that is, the inclined surface.

The second fixed prism 52 may be disposed so that the first surface 521 thereof, that is, the rear surface is parallel to the exit surface 222 of the total internal reflection prism 20 and the second surface 522 thereof, that is, the side surface is perpendicular to the exit surface 222 of the total internal reflection prism 20. Then, the second image light emitted from the exit surface 222 of the total internal reflection prism 20 may be incident on the first surface 521 of the second fixed prism 52, and then may be emitted through the third surface 523 of the second fixed prism 52, that is, the inclined surface.

The second surface 522 of the second fixed prism 52 may be disposed adjacent to and face the second surface 512 of the first fixed prism 51. In other words, the second surface 512 of the first fixed prism 51 and the second surface 522 of the second fixed prism 52 may be disposed parallel to each other.

The first fixed prism 51 and the second fixed prism 52 may be formed identically. The first fixed prism 51 and the second fixed prism 52 may have the same refractive index. The first fixed prism 51 and the second fixed prism 52 may be formed to have the same inclination angle. For example, an angle between the first surface 511 and the inclined surface 513 of the first fixed prism 51 may be the same as an angle between the first surface 521 and the inclined surface 523 of the second fixed prism 52.

The moving prism 60 may be disposed to be spaced apart from the fixed prism 50 by a predetermined distance. The moving prism 60 may be spaced apart from the fixed prism 50 by a predetermined distance in the traveling direction of the first image light and the second image light emitted from the exit surface 222 of the total internal reflection prism 20.

The moving prism 60 may be formed to transmit the first image light and the second image light emitted from the fixed prism 50. The moving prism 60 may be formed to refract and emit the incident first and second image light. The exit surface 60a of the moving prism 60 may be disposed parallel to the incident surface 50a of the fixed prism 50.

The moving prism 60 may be formed as two triangular pillars having a right-angled triangular cross-section, that is, two right triangular pillars. In other words, the moving prism 60 may include a first moving prism 61 and a second moving prism 62. Each of the first moving prism 61 and the second moving prism 62 may be formed as a triangular pillar having a right-angled triangular cross-section.

The first moving prism 61 and the second moving prism 62 may be disposed to be in contact with each other. The first moving prism 61 and the second moving prism 62 may be disposed so as not to move relative to each other. For example, the first moving prism 61 and the second moving prism 62 may be disposed on a moving plate 71 and moved integrally. Therefore, a distance between the first moving prism 61 and the second moving prism 62 does not change.

The first moving prism 61 may be disposed so that the first surface 611 thereof, that is, the front surface of the first moving prism 61 is parallel to the exit surface 222 of the total internal reflection prism 20 and the second surface 612 thereof, that is, the side surface is perpendicular to the exit surface 222 of the total internal reflection prism 20. The first surface 611 of the first moving prism 61 may be parallel to the rear surface 511 of the first fixed prism 51, and the second surface 612 thereof may be parallel to the second surface 512 of the first fixed prism 51. Then, the first image light emitted from the inclined surface 513 of the first fixed prism 51 may be incident on the third surface 613, that is, the inclined surface of the first moving prism 61, and thus may be emitted through the first surface 611, that is, the front surface of the first moving prism 61.

The second moving prism 62 may be disposed so that the first surface 621, that is, the front surface of the second moving prism 62 is parallel to the exit surface 222 of the total internal reflection prism 20 and the second surface 622 thereof, that is, the side surface is perpendicular to the exit surface 222 of the total internal reflection prism 20. The first surface 621 of the second moving prism 62 may be parallel to the rear surface of the second fixed prism 52, and the second surface 622 thereof may be parallel to the second surface 522 of the second fixed prism 52. Then, the second image light emitted from the inclined surface 523 of the second fixed prism 52 may be incident on the third surface 623, that is, the inclined surface of the second moving prism 62, and thus may be emitted through the first surface 621, that is, the front surface of the second moving prism 62.

The inclined surface 623 of the second moving prism 62 may be adjacent to and facing the inclined surface 613 of the first moving prism 61. In other words, the vertex of the first moving prism 61 and the vertex of the second moving prism 62 may be disposed to contact each other. Accordingly, the inclined surface 613 of the first moving prism 61 and the inclined surface 623 of the second moving prism 62 may form a groove having an isosceles triangular cross-section.

Accordingly, the inclined surface 613 of the first moving prism 61 may face the inclined surface 513 of the first fixed prism 51. The inclined surface 613 of the first moving prism 61 and the inclined surface 513 of the first fixed prism 51 may be parallel to each other. In addition, the inclined surface 623 of the second moving prism 62 may face the inclined surface 523 of the second fixed prism 52. The inclined surface 623 of the second moving prism 62 and the inclined surface 523 of the second fixed prism 52 may be parallel to each other.

The first moving prism 61 and the second moving prism 62 may be formed identically. The first moving prism 61 and the second moving prism 62 may have the same refractive index. The first moving prism 61 and the second moving prism 62 may be formed to have the same inclination angle. For example, an angle between the first surface 611 and the inclined surface 613 of the first moving prism 61 is the same as an angle between the first surface 621 and the inclined surface 623 of the second moving prism 62.

The first moving prism 61 may be formed as a right-angled triangular prism similar to the first fixed prism 51. The first moving prism 61 may have the same refractive index as that of the first fixed prism 51. When the refractive index of the first moving prism 61 and the refractive index of the first fixed prism 51 are the same, image distortion of the first image light may be minimized.

When the inclination angle of the first fixed prism 51 is the same as the inclination angle of the first moving prism 61, the phase change of the first image light passing through the first fixed prism 51 and the first moving prism 61 may be compensated for.

The inclination angle of the first fixed prism 51 and the inclination angle of the first moving prism 61 may be defined so that the marginal ray (or the outermost ray) of the first image light is not totally reflected. Also, the inclination angle of the first fixed prism 51 and the inclination angle of the first moving prism 61 may be defined so that the marginal ray of the first image light does not form a Brewster angle.

The second moving prism 62 may be formed as a right-angled triangular prism similar to the second fixed prism 52. The second moving prism 62 may have the same refractive index as that of the second fixed prism 52. When the refractive index of the second moving prism 62 and the refractive index of the second fixed prism 52 are the same, image distortion of the second image light may be minimized.

When the inclination angle of the second fixed prism 52 is the same as the inclination angle of the second moving prism 62, the phase change of the second image light passing through the second fixed prism 52 and the second moving prism 62 may be compensated for.

The inclination angle of the second fixed prism 52 and the inclination angle of the second moving prism 62 may be defined so that the marginal ray of the second image light is not totally reflected. Also, the inclination angle of the second fixed prism 52 and the inclination angle of the second moving prism 62 may be defined so that the marginal ray of the second image light does not form a Brewster angle.

The moving device 70 may be configured to linearly move the moving prism 60 relative to the fixed prism 50.

The moving device 70 may be configured to position the moving prism 60 in at least three positions. In other words, by the moving device 70, the moving prism 60 may be positioned at one of a first position where the first image light and the second image light form a single image on the screen, a second positon where the first image light and the second image light form dual images on the screen, and a third position where the first image light and the second image light form a wide image on the screen. The third position may be located between the first position and the second position.

The moving device 70 may include a moving plate 71 and a linear motion mechanism 72.

The moving prism 60 may be disposed on the moving plate 71. In other words, the moving plate 71 may be formed to support the moving prism 60. Therefore, the moving prism 60 is disposed on the upper surface of the moving plate 71 and may move integrally with the moving plate 71.

The linear motion mechanism 72 may be configured to linearly move the moving plate 71. The linear motion mechanism 72 may be configured to linearly move the moving plate 71 in a direction perpendicular to the exit surface 222 of the total internal reflection prism 20. In other words, the linear motion mechanism 72 may be configured to move the moving plate 71 in a direction parallel to the image light emitted from the exit surface 222 of the total internal reflection prism 20.

For example, the linear motion mechanism 72 may include a motor, a ball screw that converts rotation of the motor into linear motion, and an LM guide that guides the linear motion. Alternatively, a rack and pinion that converts rotation of the motor into linear motion may be used as the linear motion mechanism 72. Alternatively, a linear shaft and a ball bush, a slide mechanism or the like for guiding linear motion may be used as the linear motion mechanism 72. Alternatively, a linear motor may be used as the linear motion mechanism 72.

However, the linear motion mechanism 72 is not limited thereto. As long as the moving plate 71 can be moved linearly, various linear motion mechanisms 72 may be used.

The projection lens 80 is disposed in front of the beam reducer prism 40 and is formed to project the first image light and the second image light onto the screen. The projection lens 80 may be formed to form an image on the screen by enlarging the first image light and the second image light emitted from the beam reducer prism 40.

The projection lens 80 may formed as any one of a general projection lens, a wide-angle projection lens, and an ultra-wide-angle projection lens.

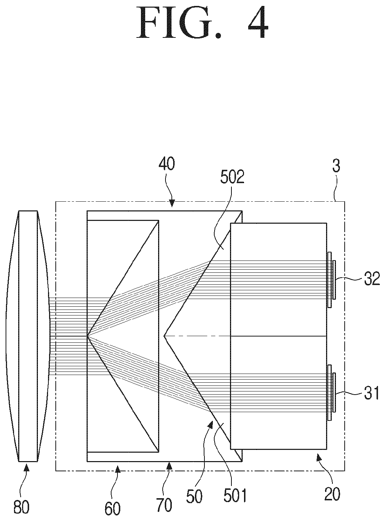

In the above, the fixed prism 50 of the beam reducer prism 40 is formed as two right-angled triangular pillars. However, the structure of the fixed prism 50 is not limited thereto. As another example, as illustrated in FIG. 4, the fixed prism 50 may be formed as a single triangular pillar having an isosceles triangular cross-section.

FIG. 4 is a view illustrating an electronic device according to one or more embodiments of the disclosure.

Referring to FIG. 4, the beam reducer prism 40 may include a fixed prism 50, a moving prism 60, and a moving device 70.

The fixed prism 50 may be formed as a triangular pillar having an isosceles triangular cross-section. The fixed prism 50 may be disposed such that the bottom surface of the isosceles triangle faces the exit surface 222 of the total internal reflection prism 20 and the vertex thereof is directed in the traveling direction of the image light.

The fixed prism 50 may be formed in a shape in which the first fixed prism 51 and the second fixed prism 52 of the fixed prism 50 of the above-described embodiment are coupled to each other. In other words, the left part 501 of the fixed prism 50 may be formed in a similar shape to the above-described first fixed prism 51, and the right part 502 thereof may be formed in a similar shape to the above-described second fixed prism 52.

The moving prism 60 and the moving device 70 are the same as or similar to the moving prism 60 and the moving device 70 of the beam reducer prism 40 according to the above-described embodiment. Therefore, detailed descriptions thereof are omitted.

The first light source 11, the second light source 12, the total internal reflection prism 20, the beam reducer prism 40, and the projection lens 80 may be disposed inside the case 3. The case 3 may form the appearance of the electronic device 1.

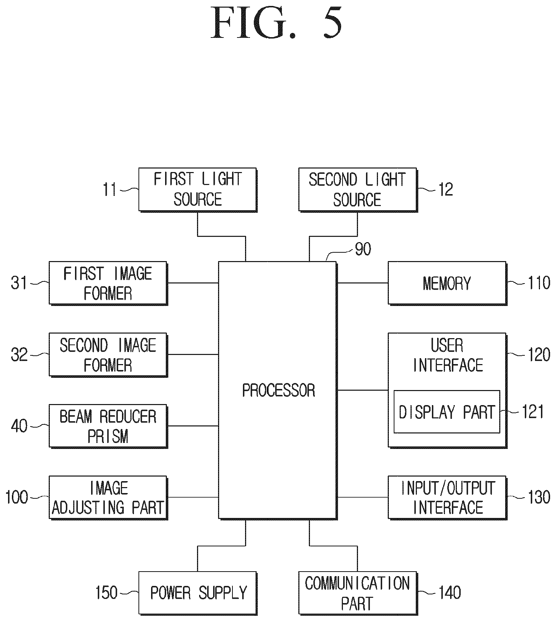

FIG. 5 is a functional block diagram of an electronic device according to one or more embodiments of the disclosure.

Referring to FIG. 5, the electronic device 1 may include a processor 90, an image adjusting part 100, a memory 110, a user interface 120, an input/output interface 130, a communication part 140, and a power supply 150.

The processor 90 may be electrically connected to the memory 110, and configured to control the operation of the electronic device 1. The processor 90 may be composed of one or a plurality of processors. In detail, the processor 90 may perform the operation of the electronic device 1 according to various embodiments of the disclosure by executing at least one instruction stored in the memory 110.

For example, the processor 90 may project one of a single image, dual images, and a wide image onto a screen by controlling the beam reducer prism 40. In detail, the processor 90 may control the moving device 70 of the beam reducer prism 40 to project one of a single image, dual images, and a wide image on the screen. In other words, when the processor 90 controls the moving device 70 to adjust the distance between the moving prism 60 and the fixed prism 50, one of a single image, dual images, and a wide image may be formed on the screen.

When the moving device 70 of the beam reducer prism 40 includes a motor, the processor 90 may control the motor to adjust the distance between the moving prism 60 and the fixed prism 50.

The processor 90 according to an embodiment may be implemented with at least one of a digital signal processor (DSP), a microprocessor, a graphics-processing unit (GPU), an artificial intelligence (AI) processor, a neural processing unit (NPU), and a time controller (TCON) for processing digital image signals. However, the processor 90 is not limited thereto, and may include at least one of a central processing unit (CPU), a micro controller unit (MCU), a micro processing unit (MPU), a controller, an application processor (AP), a communication processor (CP), and an advanced reduced instruction set computing (RISC) machine (ARM) processor or may be defined as a corresponding term. In addition, the processor 90 may be implemented as a system on chip (SoC) or a large scale integration (LSI) in which a processing algorithm is built therein, or may be implemented as an application specific integrated circuit (ASIC) type or a field programmable gate array (FPGA) type.

The image adjusting part 100 may perform various functions for adjusting a projected image under the control of the processor 90. For example, the image adjusting part 100 may perform functions such as zoom, keystone, quick corner (four corners) keystone, lens shift, or the like.

In detail, the image adjusting part 100 may enlarge or reduce the image according to the distance from the screen (projection distance). In other words, a zoom function may be performed according to the distance from the screen. In this case, the zoom function may include a hardware method of adjusting the image size by moving a lens and a software method of adjusting the image size by cropping an image.

Meanwhile, when the zoom function is performed, the focus of the image needs to be adjusted. For example, methods for adjusting the focus include a manual focus method, a motorized focus method, or the like. The manual focus method refers to a method of manually focusing an image. The motorized focus method refers to a method of automatically focusing an image using a motor built in the electronic device 1 when the zoom function is performed.

When performing the zoom function, the image adjusting part 100 may provide a digital zoom function through software, and may provide an optical zoom function that performs the zoom function by moving a lens through a driver.

In addition, the image adjusting part 100 may perform a keystone function. In the case of projecting an image frontally, when the height of the image is not correct, the image may be distorted up or down. The keystone function refers to a function of correcting a distorted image. For example, when distortion occurs in the left and right directions of the image, it may be corrected using a horizontal keystone. When distortion occurs in the vertical direction of the image, it may be corrected using a vertical keystone.

The quick corner (four corners) keystone function refers to a function of correcting an image when the central area of the image is normal but the corner area thereof is not balanced. The lens shift function refers to a function that moves an image as it is when the image is out of the screen.

On the other hand, the image adjusting part 100 may be configured to automatically analyze the surrounding environment and the projection environment without user input to provide the zoom/keystone/focus functions. In detail, the image adjusting part 100 may be configured to automatically provide the zoom/keystone/focus functions based on a distance between the screen and the electronic device 1, information about the space where the electronic device 1 is currently located, information about an amount of ambient light, and the like detected through sensors (depth camera, distance sensor, infrared sensor, illumination sensor, etc.).

The memory 110 may be configured to store at least one instruction related to the electronic device 1. In addition, an operating system (O/S) for driving the electronic device 1 may be stored in the memory 110. Also, various software programs or applications for operating the electronic device 1 according to one or more embodiments of the disclosure may be stored in the memory 110. The memory 110 may include a semiconductor memory such as a flash memory, a magnetic storage medium such as a hard disk, and the like.

In detail, various software modules for operating the electronic device 1 according to various embodiments of the disclosure may be stored in the memory 110, and the processor 90 may execute various software modules stored in the memory 110 so as to control the operation of the electronic device 1. In other words, the memory 110 may be accessed by the processor 90, and data may be read/written/modified/deleted/updated by the processor 90.

On the other hand, in the disclosure, the memory 110 may refer to a memory, a read only memory (ROM) (not illustrated) in the processor 90, a read access memory (RAM) (not illustrated), or a memory card (e.g., a micro SD card and a memory stick) (not illustrated) mounted in the electronic device 1.

The user interface 120 may be configured to allow user's commands to be input. For example, the user interface 120 may include a display part 121. The display part 121 may be formed as a touch screen. The display part 121 may be provided on an outer surface of the case 3.

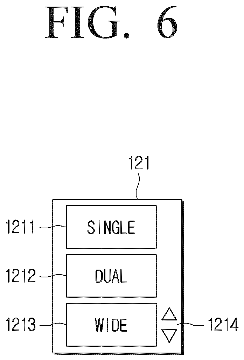

Icons capable of controlling the electronic device 1 may be displayed on the display part 121. The user may operate the electronic device 1 by touching the icons. For example, as illustrated in FIG. 6, icons capable of controlling the beam reducer prism 40 may be displayed on the display part 121.

FIG. 6 is a view illustrating a user interface screen of a display part 121 of an electronic device 1 according to one or more embodiments of the disclosure.

Referring to FIG. 6, a single button 1211, a dual button 1212, a wide button 1213, and a wide image adjusting button 1214 may be displayed on the display part 121.

When the user touches the single button 1211, the moving prism 60 of the beam reducer prism 40 moves so that a single image may be projected on the screen.

When the user touches the dual button 1212, the moving prism 60 of the beam reducer prism 40 moves so that dual images may be projected on the screen.

When the user touches the wide button 1213, the moving prism 60 of the beam reducer prism 40 moves so that a wide image may be projected on the screen.

The wide image adjusting button 1214 may be displayed on one side of the wide button 1213. The wide image adjusting button 1214 may be configured to adjust the aspect ratio of a wide image.

The wide image adjusting button 1214 may include an up arrow and a down arrow. Touching the up arrow increases the horizontal length of the wide image, and touching the down arrow decreases the horizontal length of the wide image. Therefore, the user may arbitrarily adjust the aspect ratio of the wide image using the wide image adjusting button 1214.

In addition, the user interface 120 may include various types of input devices. For example, the user interface 120 may include physical buttons. In this case, the physical buttons may include function keys, direction keys (e.g., four direction keys), or a dial button. According to one embodiment, the physical buttons may be implemented as a plurality of keys.

According to another embodiment, the physical button may be implemented as a single key. Here, when the physical button is implemented as the single key, the electronic device 1 may receive a user input in which the single key is pressed for a critical period of time or more. When the user input in which the single key is pressed for a critical period of time or more is received, the processor 90 may perform a function corresponding to the user input. For example, the processor 90 may provide one of a single image, dual images, and a wide image by controlling the beam reducer prism 40 based on the user input.

On the other hand, the electronic device 1 may be configured to receive the user input in various ways other than the above-described user interface 120. As an example, the electronic device 1 may receive a user input through an external remote control device. Hear, the external remote control device may be a remote control device corresponding to the electronic device 1 (e.g., a control device dedicated to the electronic device 1) or a user's portable communication device (e.g., a smartphone or a wearable device). Here, an application for controlling the electronic device 1 may be stored in the user's portable communication device. The portable communication device may obtain a user input through the stored application and transmit the obtained user input to the electronic device 1. The electronic device 1 may receive the user input from the portable communication device and perform an operation corresponding to the user's control command.

The input/output interface 130 is a component for inputting/outputting at least one of an audio signal and a video signal. The input/output interface 130 may receive at least one of an audio signal and a video signal from an external device and output a control command to the external device.

On the other hand, the input/output interface 130 according to an embodiment of the disclosure may be implemented with at least one wired input/output interface among High Definition Multimedia Interface (HDMI), Mobile High Definition Link (MHL), Universal Serial Bus (USB), USB C-type, Display Port (DP), Thunderbolt, Video Graphics Array (VGA) port, RGB port, D-subminiature (D-SUB), and Digital Visual Interface (DVI). According to an embodiment, the wired input/output interface 130 may be implemented as an interface for inputting/outputting only audio signals and an interface for inputting/outputting only video signals, or may be implemented as an interface for inputting/outputting both audio signals and video signals.

In addition, the electronic device 1 may receive data through the wired input/output interface 130, but this is only an example. The electronic device 1 may receive power through the wired input/output interface 130. For example, the electronic device 1 may receive power from an external battery through USB C-type or from an outlet through a power adapter. As another example, the electronic device 1 may receive power from an external device (e.g., a laptop computer or a monitor) through DP.

The communication part 140 may be configured to connect the electronic device 1 with a server or an external device. The communication part 140 may be connected to the server or the external device wirelessly or wired.

The wired communication part 140 may be implemented as an Ethernet module.

The wireless communication part 140 may be implemented as at least one communication method among Wi-Fi, Wi-Fi Direct, Bluetooth, ZigBee, 3^{rd} Generation (3G), 3^{rd} Generation Partnership Project (3GPP), Long Term Evolution (LTE), and 5^{th} Generation (5G).

According to an implementation example, the communication part 140 may be implemented to input/output only signals connecting the server or the external device. Alternatively, the communication part 140 may be implemented to input/output audio signals and video signals in addition to connection signals.

The power supply 150 may be configured to receive power from the outside and supply power to various components of the electronic device 1. The power supply 150 according to an embodiment of the disclosure may receive power through various methods. As an example, the power supply 150 may receive power using a connector. In addition, the power supply 150 may receive power using a 220V DC power cord. However, the disclosure is not limited thereto. The electronic device 1 may be configured to receive power using a USB power cord or a wireless charging method.

In addition, the power supply 150 may be configured to receive power using an internal battery or an external battery. For example, the power supply 150 may be configured to charge power of the internal battery using at least one of a 220V DC power cord, a USB power cord, and a USB C-type power cord, and to receive power through the charged internal battery.

In addition, the power supply 150 according to an embodiment of the disclosure may receive power through the external battery. For example, when the electronic device 1 and the external battery are connected through various wired communication methods such as a USB power cord, a USB C-type power cord, a socket home, or the like, the power supply 150 may receive power through the external battery. In other words, the power supply 150 may directly receive power from the external battery, or may charge the internal battery through the external battery and receive power from the charged internal battery.

The power supply 150 according to the disclosure may receive power using at least one of the plurality of power supply methods as described above.

On the other hand, the electronic device 1 according to one or more embodiments of the disclosure may provide various smart functions.

In detail, the electronic device 1 may be connected to a portable terminal device for controlling the electronic device 1, and a screen output from the electronic device 1 may be controlled through a user input being input from the portable terminal device. For example, the portable terminal device may be implemented as a smartphone including a touch display. The electronic device 1 may receive screen data provided by the portable terminal device from the portable terminal device, and may output the screen data. The screen output from the electronic device 1 may be controlled according to a user input being input from the portable terminal device.

For example, the electronic device 1 may project one of a single image, dual images, and a wide image onto a screen according to the user input from the portable terminal device.

The electronic device 1 may be configured to share content or music provided by the portable terminal device by connecting to the portable terminal device through various communication methods such as Miracast, Airplay, wireless DEX, Remote PC, and the like.

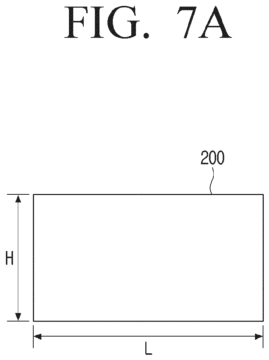

Hereinafter, an operation of projecting a single image, dual images, and a wide image on a screen by the electronic device 1 according to one or more embodiments of the disclosure having the above-described structure will be described with reference to FIGS. 7A to 11B.

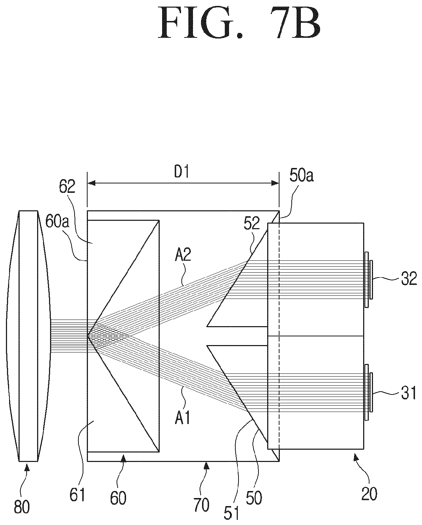

First, with reference to FIGS. 7A and 7B, an operation of projecting a single image by the electronic device 1 according to one or more embodiments of the disclosure will be described.

FIG. 7A is a view illustrating a single image projected by an electronic device 1 according to one or more embodiments of the disclosure. FIG. 7B is a view illustrating a relationship between a fixed prism 50 and a moving prism 60 of the electronic device 1 according to one or more embodiments of the disclosure that projects the single image of FIG. 7A.

Referring to FIG. 7A, one image, that is, a single image 200 may be projected on the screen by the electronic device 1. The single image 200 has a horizontal length of L and a vertical length of H.

In this case, the moving prism 60 may be positioned as far as possible from the fixed prism 50.

Referring to FIG. 7B, the distance between the fixed prism 50 and the moving prism 60 of the beam reducer prism 40 of the electronic device 1 is D1. Therefore, D1 may be the maximum distance between the fixed prism 50 and the moving prism 60.

Here, the distance between the fixed prism 50 and the moving prism 60 refers to the distance between the incident surface 50a of the fixed prism 50 and the exit surface 60a of the moving prism 60.

The incident surface 50a of the fixed prism 50 refers to one surface of the fixed prism 50 on which the first image light A1 and the second image light A2 emitted from the total internal reflection prism 20 are incident. The incident surface 50a of the fixed prism 50 closely faces the exit surface 222 of the total internal reflection prism 20. Accordingly, the incident surface 50a of the fixed prism 50 may be formed as the first surface 511 of the first fixed prism 51 and the first surface 521 of the second fixed prism 52.

The exit surface 60a of the moving prism 60 refers to one surface of the moving prism 60 from which the first image light A1 and the second image light A2 incident from the fixed prism 50 are emitted. The exit surface 60a of the moving prism 60 closely faces the projection lens 80. Accordingly, the exit surface 60a of the moving prism 60 may be formed of the first surface 611 of the first moving prism 61 and the first surface 621 of the second moving prism 62.

When forming a single image on the screen, the user may touch the single button 1211 displayed on the display part 121 (see FIG. 6).

When the single button 1211 is touched, both the first light source 11 and the second light source 12 may be turned on.

When the first light source 11 is turned on, first light is emitted from the first light source 11. The first light is incident on the incident surface of the total internal reflection prism 20. The first light incident on the total internal reflection prism 20 is reflected by the first image former 31 to form the first image light A1.

When the second light source 12 is turned on, second light is emitted from the second light source 12. The second light is incident on the incident surface of the total internal reflection prism 20. The second light incident on the total internal reflection prism 20 is reflected by the second image former 32 to form the second image light A2.

The first image light A1 and the second image light A2 may pass through the beam reducer prism 40 and be emitted to the projection lens 80. In detail, the first image light A1 is refracted while passing through the first fixed prism 51 and is incident on the first moving prism 61. The second image light A2 is refracted while passing through the second fixed prism 52 and is incident on the second moving prism 62.

At this time, when the moving prism 60 is maximally far from the fixed prism 50, the first image light A1 and the second image light A2 may completely overlap each other in the moving prism 60. The overlapped first and second image lights A1 and A2 may form image light.

The projection lens 80 may magnify the image light passing through the moving prism 60 of the beam reducer prism 40 and project it onto the screen. An image obtained by projecting the overlapped first and second image lights A1 and A2 onto the screen by the projection lens 80 is a single image 200.

When the distance between the fixed prism 50 and the moving prism 60 is D1, the single image 200 is formed on the screen. Therefore, the position of the moving prism 60 at this time may be referred to as the first position.

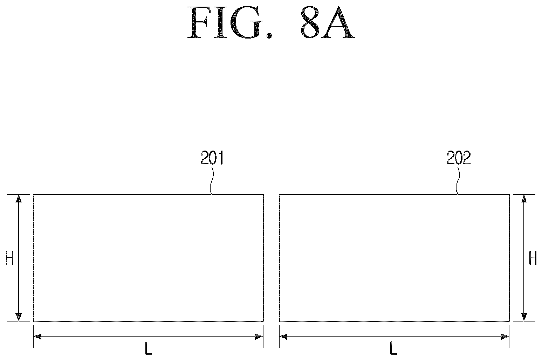

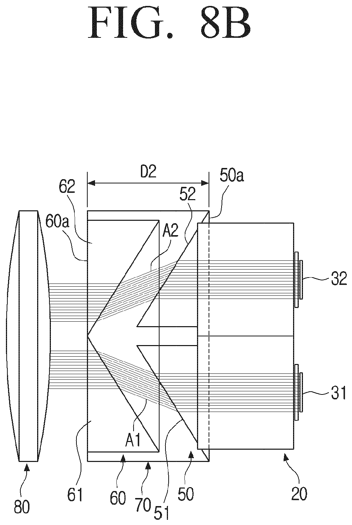

Next, an operation of projecting dual images by the electronic device 1 according to one or more embodiments of the disclosure will be described with reference to FIGS. 8A and 8B,

FIG. 8A is a view illustrating dual images projected by an electronic device 1 according to one or more embodiments of the disclosure. FIG. 8B is a view illustrating a relationship between a fixed prism 50 and a moving prism 60 of the electronic device 1 according to one or more embodiments of the disclosure that projects the dual images of FIG. 8A.

Referring to FIG. 8A, two images 201 and 202, that is, dual images may be projected on the screen by the electronic device 1. The dual images 201 and 202 may be formed in the same size. The dual images 201 and 202 may be formed to have the same size as the single image 200 of FIG. 7A. In other words, each of the dual images 201 and 202 has a horizontal length of L and a vertical length of H.

In this case, the moving prism 60 may be positioned as close to the fixed prism 50 as possible.

Referring to FIG. 8B, the distance between the fixed prism 50 and the moving prism 60 of the beam reducer prism 40 of the electronic device 1 is D2. Therefore, D2 may be the minimum distance between the fixed prism 50 and the moving prism 60.

When forming dual images on the screen, the user may touch the dual button 1212 displayed on the display part 121.

When the dual button 1212 is touched, both the first light source 11 and the second light source 12 may be turned on.

When the first light source 11 is turned on, first light is emitted from the first light source 11. The first light is incident on the incident surface of the total internal reflection prism 20. The first light incident on the total internal reflection prism 20 is reflected by the first image former 31 to form the first image light A1.

When the second light source 12 is turned on, second light is emitted from the second light source 12. The second light is incident on the incident surface of the total internal reflection prism 20. The second light incident on the total internal reflection prism 20 is reflected by the second image former 32 to form the second image light A2.

The first image light A1 and the second image light A2 may pass through the beam reducer prism 40 and be emitted to the projection lens 80. In detail, the first image light A1 is refracted while passing through the first fixed prism 51 and is incident on the first moving prism 61. The second image light A2 is refracted while passing through the second fixed prism 52 and is incident on the second moving prism 62.

At this time, when the moving prism 60 is maximally close to the fixed prism 50, the first image light A1 and the second image light A2 may be completely separated from each other in the moving prism 60.

The projection lens 80 may enlarge and project the first image light A1 and the second image light A2 passing through the moving prism 60 of the beam reducer prism 40 onto the screen. Images obtained by projecting the separated first image light A1 and second image light A2 onto the screen by the projection lens 80 are dual images, that is, a first image 201 and a second image 202. The first image 201 and the second image 202 may be spaced apart from each other by a predetermined distance.

When the electronic device 1 projects the dual images, the two images 201 and 202 may be the same image or different images.

When the distance between the fixed prism 50 and the moving prism 60 is D2, the dual images are formed on the screen. Therefore, the position of the moving prism 60 at this time may be referred to as the second position.

In the case that the moving prism 60 is in the second position, when one of the first light source 11 and the second light source 12 is turned off, only one of the first image 201 and the second image 202 may be projected on the screen.

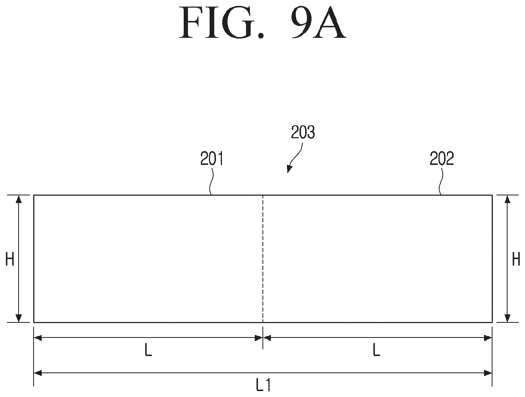

Finally, an operation of projecting a wide image by the electronic device 1 according to one or more embodiments of the disclosure will be described with reference to FIGS. 9A to 11B.

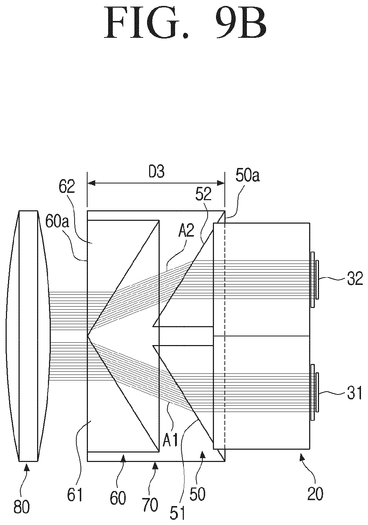

FIG. 9A is a view illustrating a wide image projected by an electronic device 1 according to one or more embodiments of the disclosure. FIG. 9B is a view illustrating a relationship between a fixed prism 50 and a moving prism 60 of the electronic device 1 according to one or more embodiments of the disclosure that projects the wide image of FIG. 9A.

Referring to FIG. 9A, one image, that is, a wide image 203 may be projected on the screen by the electronic device 1. The wide image 203 may be larger than each of the single image 201 and the first image 202 and second image 203 of the dual images. In other words, the wide image 203 has a horizontal length of L1 and a vertical length of H. The vertical length H of the wide image 203 may be the same as the vertical length H of each of the single image and the dual images.

The wide image 203 shown in FIG. 9A may have the same size as the size of an image obtained by connecting the dual images of FIG. 8A. In other words, the horizontal length L1 of the wide image 203 may be 2L (L1=2L).

In this case, the moving prism 60 may be spaced apart from the fixed prism 50 by a predetermined distance.

Referring to FIG. 9B, the distance between the fixed prism 50 and the moving prism 60 of the beam reducer prism 40 of the electronic device 1 is D3. D3 may be larger than the minimum distance D2 between the fixed prism 50 and the moving prism 60 and smaller than the maximum distance D1 therebetween.

When forming a wide image 203 on the screen, the user may touch the wide button 1213 displayed on the display part 121.

When the wide button 1213 is touched, both the first light source 11 and the second light source 12 may be turned on.

When the first light source 11 is turned on, first light is emitted from the first light source 11. The first light is incident on the incident surface of the total internal reflection prism 20. The first light incident on the total internal reflection prism 20 is reflected by the first image former 31 to form the first image light A1.

When the second light source 12 is turned on, second light is emitted from the second light source 12. The second light is incident on the incident surface of the total internal reflection prism 20. The second light incident on the total internal reflection prism 20 is reflected by the second image former 32 to form the second image light A2.

The first image light A1 and the second image light A2 may pass through the beam reducer prism 40 and be emitted to the projection lens 80. In detail, the first image light A1 is refracted while passing through the first fixed prism 51 and is incident on the first moving prism 61. The second image light A2 is refracted while passing through the second fixed prism 52 and is incident on the second moving prism 62.

At this time, when the moving prism 60 is spaced apart from the fixed prism 50 by a certain distance, the first image light A1 and the second image light A2 may come into contact with each other in the moving prism 60. In other words, the outermost ray of first image light A1 and the outermost ray of the second image light A2 may contact each other.

The projection lens 80 may enlarge and project the first image light A1 and the second image light A2 passing through the moving prism 60 of the beam reducer prism 40 onto the screen. An image obtained by projecting the first image light A1 and the second image light A2 that are in contact with each other onto the screen by the projection lens 80 may form the wide image 203. At this time, the aspect ratio of the wide image 203 is L1: H (=2L: H).

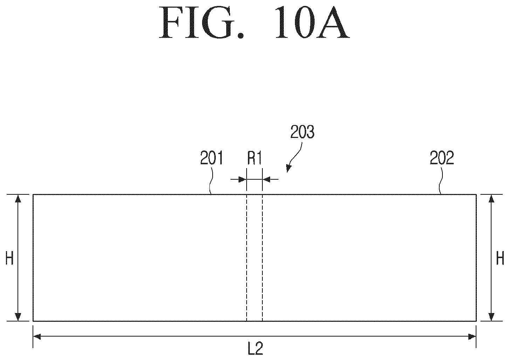

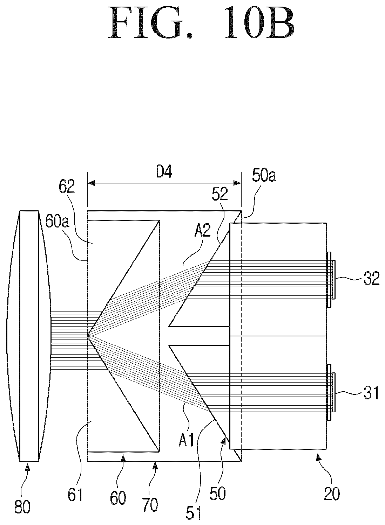

FIG. 10A is a view illustrating a wide image 203 projected by an electronic device 1 according to one or more embodiments of the disclosure. FIG. 10B is a view illustrating a relationship between a fixed prism 50 and a moving prism 60 of the electronic device 1 according to one or more embodiments of the disclosure that projects the wide image of FIG. 10A.

Referring to FIG. 10A, one image, that is, a wide image 203 may be projected on the screen by the electronic device 1. The wide image 203 may be larger than each of the single image 201 and the first image 202 and second image 203 of the dual images. In other words, the wide image 203 has a horizontal length of L2 and a vertical length of H. The vertical length H of the wide image 203 may be the same as the vertical length H of each of the single image and the dual images.

The wide image 203 shown in FIG. 10A may have a smaller size than the wide image 203 shown in FIG. 9A. In other words, the horizontal length L2 of the wide image 203 of FIG. 10A may be smaller than the horizontal length L1 of the wide image 203 of FIG. 9A (L2<L1=2L). In this case, the wide image 203 may be in a state in which two images 201 and 202 of the dual images overlap by a certain width R1. The overlapping portion may be naturally implemented as one image by using an image blending method or an image stitching method.

In this case, the moving prism 60 may be spaced apart from the fixed prism 50 by a certain distance.

Referring to FIG. 10B, the distance between the fixed prism 50 and the moving prism 60 of the beam reducer prism 40 of the electronic device 1 is D4. D4 may be larger than the minimum distance D2 between the fixed prism 50 and the moving prism 60 and smaller than the maximum distance D1 therebetween. Also, D4 may be greater than the distance D3 between the fixed prism 50 and the moving prism 60 forming the wide image 203 shown in FIG. 9A (D4>D3).

When forming the wide image 203 of FIG. 10A on the screen, the user may touch the wide button 1213 displayed on the display part 121. In addition, the user may adjust the aspect ratio of the wide image 203 by touching the wide image adjusting button 1214.

When the wide button 1213 is touched, both the first light source 11 and the second light source 12 may be turned on when the wide image 203 is formed on the screen.

When the first light source 11 is turned on, first light is emitted from the first light source 11. The first light is incident on the incident surface of the total internal reflection prism 20. The first light incident on the total internal reflection prism 20 is reflected by the first image former 31 to form the first image light A1.

When the second light source 12 is turned on, second light is emitted from the second light source 12. The second light is incident on the incident surface of the total internal reflection prism 20. The second light incident on the total internal reflection prism 20 is reflected by the second image former 32 to form the second image light A2.

The first image light A1 and the second image light A2 may pass through the beam reducer prism 40 and be emitted to the projection lens 80. In detail, the first image light A1 is refracted while passing through the first fixed prism 51 and is incident on the first moving prism 61. The second image light A2 is refracted while passing through the second fixed prism 52 and is incident on the second moving prism 62.

At this time, when the moving prism 60 is spaced apart from the fixed prism 50 by a certain distance, the first image light A1 and the second image light A2 may overlap each other by a certain width in the moving prism 60. In other words, light rays located within a certain distance from the outermost ray of first image light A1 and light rays located within a certain distance from the outermost ray of the second image light A2 may overlap each other.

The projection lens 80 may enlarge and project the first image light A1 and the second image light A2, which are overlapped with the certain width, passing through the moving prism 60 of the beam reducer prism 40 onto the screen. An image obtained by projecting the first image light A1 and the second image light A2 that are overlapped with the certain width in this way onto the screen by the projection lens 80 may form the wide image 203. This wide image 203 may be regarded as an image in which two images 201 and 202 of the dual images overlap by a first width R1.

At this time, the aspect ratio of the wide image 203 is L2:H. The aspect ratio of the wide image 203 of FIG. 10A may be different from that of the wide image 203 of FIG. 9A.

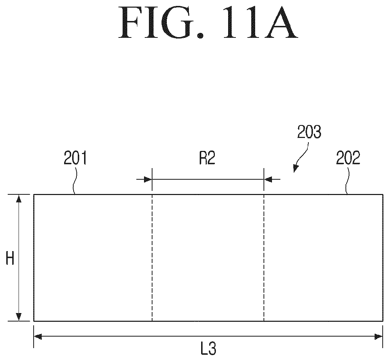

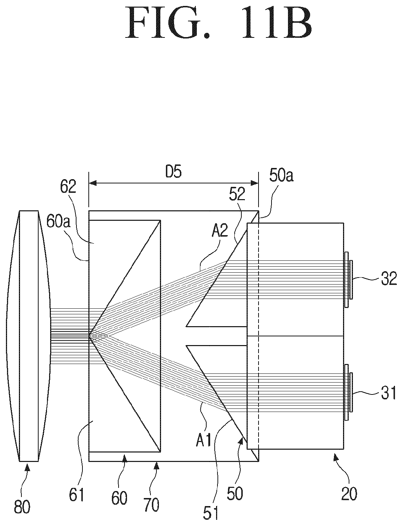

FIG. 11A is a view illustrating a wide image projected by an electronic device 1 according to one or more embodiments of the disclosure. FIG. 11B is a view illustrating a relationship between a fixed prism 50 and a moving prism 60 of the electronic device 1 according to one or more embodiments of the disclosure that projects the wide image of FIG. 11A.

Referring to FIG. 11A, one image, that is, a wide image 203 may be projected on the screen by the electronic device 1. The wide image 203 may be larger than each of the single image 201 and the first image 202 and second image 203 of the dual images. In other words, the wide image 203 has a horizontal length of L3 and a vertical length of H. The vertical length H of the wide image 203 may be the same as the vertical length H of each of the single image and the dual images.

The wide image 203 shown in FIG. 11A may have a smaller size than the wide image 203 shown in FIG. 10A. In other words, the horizontal length L3 of the wide image 203 of FIG. 11A may be smaller than the horizontal length L2 of the wide image 203 of FIG. 10A and the horizontal length L1 of the wide image 203 of FIG. 9A (L3<L2<L1=2L). In this case, the wide image 203 may be in a state where the two images 201 and 202 of the dual images overlap by a second width R2. The overlapping portion may be naturally implemented as one image by using an image blending method or an image stitching method.

In this case, the moving prism 60 may be spaced apart from the fixed prism 50 by a predetermined distance.

Referring to FIG. 11B, the distance between the fixed prism 50 and the moving prism 60 of the beam reducer prism 40 of the electronic device 1 is D5. D5 may be larger than the minimum distance D2 between the fixed prism 50 and the moving prism 60 and smaller than the maximum distance D1 therebetween. Also, D5 may be greater than the distance D4 between the fixed prism 50 and the moving prism 60 forming the wide image 203 shown in FIG. 10A (D5>D4>D3).

When forming the wide image 203 of FIG. 11A on the screen, the user may touch the wide button 1213 displayed on the display part 121. In addition, the user may adjust the aspect ratio of the wide image 203 by touching the wide image adjusting button 1214.

When the wide button 1213 is touched, both the first light source 11 and the second light source 12 may be turned on.

When the first light source 11 is turned on, first light is emitted from the first light source 11. The first light is incident on the incident surface of the total internal reflection prism 20. The first light incident on the total internal reflection prism 20 is reflected by the first image former 31 to form the first image light A1.

When the second light source 12 is turned on, second light is emitted from the second light source 12. The second light is incident on the incident surface of the total internal reflection prism 20. The second light incident on the total internal reflection prism 20 is reflected by the second image former 32 to form the second image light A2.

The first image light A1 and the second image light A2 may pass through the beam reducer prism 40 and be emitted to the projection lens 80. In detail, the first image light A1 is refracted while passing through the first fixed prism 51 and is incident on the first moving prism 61. The second image light A2 is refracted while passing through the second fixed prism 52 and is incident on the second moving prism 62.

At this time, when the moving prism 60 is spaced apart from the fixed prism 50 by a certain distance D5, the first image light A1 and the second image light A2 may overlap each other by a certain width in the moving prism 60. In other words, light rays located within a certain distance from the outermost ray of first image light A1 and light rays located within a certain distance from the outermost ray of the second image light A2 may overlap each other. At this time, the overlapping width of the first image light A1 and the second image light A2 to form the wide image 203 of FIG. 11A may be greater than the overlapping width of the first image light A1 and the second image light A2 when forming the wide image 203 of FIG. 10A.

The projection lens 80 may enlarge and project the first image light A1 and the second image light A2, which are overlapped with a certain width, passing through the moving prism 60 of the beam reducer prism 40 onto the screen. An image obtained by projecting the first image light A1 and the second image light A2 that are overlapped with a certain width in this way onto the screen by the projection lens 80 may form the wide image 203. This wide image 203 may be regarded as an image in which two images 201 and 202 of the dual images overlap by the second width R2.

At this time, the aspect ratio of the wide image 203 is L3:H. The aspect ratio of the wide image 203 of FIG. 11A may be different from the aspect ratio of the wide image 203 of FIG. 10A and the aspect ratio of the wide image 203 of FIG. 9A.

When the distance between the fixed prism 50 and the moving prism 60 is D3, D4, or D5, a wide image 203 is formed on the screen. Therefore, the positions of the moving prism 60 at this time may be referred to as a third position.

As described above, the electronic device 1 according to one or more embodiments of the disclosure may project a single image, dual images, and a wide image on the screen using the beam reducer prism 40 with a single device.

In addition, in the electronic device 1 according to one or more embodiments of the disclosure, when projecting a wide image, the aspect ratio of the wide image may be freely adjusted using the beam reducer prism 40.

In the foregoing, the disclosure has been shown and described with reference to various embodiments. However, it is understood by those skilled in the art that various changes may be made in form and detail without departing from the scope of the disclosure as defined by the appended claims.

## Claims

1. An electronic device (1) comprising:
a first light source (11) configured to emit a first light;
a second light source (12) disposed parallel to the first light source and configured to emit a second light;
a total internal reflection prism (20) disposed in front of the first light source and the second light source, and configured to refract the first light and the second light;
a first image former (31) disposed adjacent to a first surface (212) of the total internal reflection prism (20), and configured to form the first light refracted by the total internal reflection prism (20) as a first image light and reflect the first image light to the total internal reflection prism (20) so that the total internal reflection prism (20) emits the first image light;
a second image former (32) disposed adjacent to the first surface (212) of the total internal reflection prism (20) and parallel to the first image former (31), and configured to form the second light refracted by the total internal reflection prism (20) as a second image light and reflect the second image light to the total internal reflection prism (20) so that the total internal reflection prism (20) emits the second image light;
a beam reducer prism (40) configured to adjust a distance between the first image light and the second image light emitted from the total internal reflection prism (20), and
a projection lens (80) configured to project the distance adjusted first image light and second image light onto a screen.

2. The electronic device (1) of claim 1,
wherein the beam reducer prism (40) is configured to adjust the distance between the first image light and the second image light so that the distance adjusted first image light and second image light form one of a single image, a wide image, and dual images on the screen.

3. The electronic device (1) of claim 1 or 2,
wherein the beam reducer prism (40) includes:
a fixed prism (50) adjacent to an exit surface (222) of the total internal reflection prism (20),
a moving prism (60) spaced apart from the fixed prism, prism (50) and
a moving device (70) configured to linearly move the moving prism (60) with respect to the fixed prism. prism (50).

4. The electronic device (1) of claim 3,
wherein the moving prism (60) is positionable in a first position where the distance adjusted first image light and second image light form a single image on the screen, a second position where the distance adjusted first image light and second image light form dual images on the screen, and a third position where the distance adjusted first image light and second image light form a wide image on the screen.

5. The electronic device (1) of claim 4,
wherein the third position is located between the first position and the second position.

6. The electronic device (1) of claim 3, wherein
the fixed prism (50) includes:
a first fixed prism (51), and
a second fixed prism (52) spaced apart from the first fixed prism (51),
each of the first fixed prism (51) and the second fixed prism (52) is a right-angled triangular pillar, and the first fixed prism (51) and the second fixed prism (52) are arranged in an isosceles triangular shape with a base side parallel to the exit surface (222) of the total internal reflection prism (20).

7. The electronic device (1) of claim 6, wherein
the moving prism (60) includes:
a first moving prism (61), and
a second moving prism (62) in contact with the first moving prism, prism (61),
an inclined surface (613) of the first moving prism (61) faces, and is parallel to, an inclined surface (513) of the first fixed prism (51), and
an inclined surface (623) of the second moving prism (62) faces, and is parallel to, an inclined surface (523) of the second fixed prism (52).

8. The electronic device (1) of claim 6,
wherein the fixed prism (50) and the moving prism (60) have an identical refractive index.

9. The electronic device (1) of claim 3,
wherein the fixed prism (50) is a triangular pillar having an isosceles triangular cross-section.

10. The electronic device (1) of claim 3,
wherein the moving device (70) includes:
a moving plate (71) on which the moving prism (60) is disposed, and
a linear motion mechanism (72) configured to linearly move the moving plate (71).

11. The electronic device (1) of claim 1,
wherein the first image former (31) and the second image former (32) each include a digital micromirror device.

12. The electronic device (1) of claim 1,
wherein the first image former (31) and the second image former (32) are disposed on a same plane.

13. The electronic device (1) of claim 1,
wherein the projection lens (80) includes a wide-angle projection lens or an ultra-wide-angle projection lens.

14. The electronic device (1) of claim 1, further comprising:
a case (3),
wherein the first light source (11), the second light source (12), the total internal reflection prism (20), the beam reducer prism (40),
and the projection lens (80) are disposed inside the case (3).

15. The electronic device (1) of claim 14,
wherein the case (3) includes a display part (121) configured to display a button for adjusting the beam reducer prism (40).

## Patentansprüche

1. Elektronische Vorrichtung (1), umfassend:
eine erste Lichtquelle (11), die dazu konfiguriert ist, ein erstes Licht zu emittieren;
eine zweite Lichtquelle (12), die parallel zu der ersten Lichtquelle angeordnet und dazu konfiguriert ist, ein zweites Licht zu emittieren;
ein Totalreflexionsprisma (20), das vor der ersten Lichtquelle und der zweiten Lichtquelle angeordnet und dazu konfiguriert ist, das erste Licht und das zweite Licht zu brechen;
einen ersten Bildausbilder (31), der benachbart zu einer ersten Oberfläche (212) des Totalreflexionsprismas (20) angeordnet ist, und dazu konfiguriert ist, das erste Licht, das durch das Totalreflexionsprisma (20) gebrochen wird, als ein erstes Bildlicht auszubilden und das erste Bildlicht zu dem Totalreflexionsprisma (20) zu reflektieren, sodass das Totalreflexionsprisma (20) das erste Bildlicht emittiert;
einen zweiten Bildausbilder (32), der benachbart zu der ersten Oberfläche (212) des Totalreflexionsprismas (20) und parallel zu dem ersten Bildausbilder (31) angeordnet ist und dazu konfiguriert ist, das zweite Licht, das durch das Totalreflexionsprisma (20) gebrochen wird, als ein zweites Bildlicht auszubilden und das zweite Bildlicht zu dem Totalreflexionsprisma (20) zu reflektieren, sodass das Totalreflexionsprisma (20) das zweite Bildlicht emittiert;
ein Strahlreduzierungsprisma (40), das dazu konfiguriert ist, einen Abstand zwischen dem ersten Bildlicht und dem zweiten Bildlicht, die von dem Totalreflexionsprisma (20) emittiert werden, anzupassen, und
eine Projektionslinse (80), die dazu konfiguriert ist, das erste Bildlicht und das zweite Bildlicht, die abstandsangepasst wurden, auf einen Bildschirm zu projizieren.

2. Elektronische Vorrichtung (1) nach Anspruch 1,
wobei das Strahlreduzierungsprisma (40) dazu konfiguriert ist, den Abstand zwischen dem ersten Bildlicht und dem zweiten Bildlicht so anzupassen, dass das erste Bildlicht und das zweite Bildlicht, die abstandsangepasst wurden, eines von einem einzelnen Bild, einem breiten Bild und zwei Bildern auf dem Bildschirm ausbilden.

3. Elektronische Vorrichtung (1) nach Anspruch 1 oder 2,
wobei das Strahlreduzierungsprisma (40) Folgendes enthält:
ein festes Prisma (50) benachbart zu einer Austrittsoberfläche (222) des Totalreflexionsprismas (20),
ein bewegliches Prisma (60), das von dem festen Prisma, Prisma (50) beabstandet ist, und
eine Bewegungsvorrichtung (70), die dazu konfiguriert ist, das bewegliche Prisma (60) in Bezug auf das feste Prisma, Prisma (50) linear zu bewegen.

4. Elektronische Vorrichtung (1) nach Anspruch 3,
wobei das bewegliche Prisma (60) in einer ersten Position, in der das erste Bildlicht und das zweite Bildlicht, die abstandsangepasst wurden, ein einzelnes Bild auf dem Bildschirm ausbilden, einer zweiten Position, in der das erste Bildlicht und das zweite Bildlicht, die abstandsangepasst wurden, zwei Bilder auf dem Bildschirm ausbilden, und einer dritten Position, in der das erste Bildlicht und das zweite Bildlicht, die abstandsangepasst wurden, ein breites Bild auf dem Bildschirm ausbilden, positionierbar ist.

5. Elektronische Vorrichtung (1) nach Anspruch 4,
wobei sich die dritte Position zwischen der ersten Position und der zweiten Position befindet.

6. Elektronische Vorrichtung (1) nach Anspruch 3, wobei
das feste Prisma (50) Folgendes enthält:
ein erstes festes Prisma (51) und
ein zweites festes Prisma (52), das von dem ersten festen Prisma (51) beabstandet ist,
wobei jedes von dem ersten festen Prisma (51) und dem zweiten festen Prisma (52) eine rechtwinklige dreieckige Säule ist, und
das erste feste Prisma (51) und das zweite feste Prisma (52) in einer gleichschenkligen dreieckigen Form mit einer Basisseite parallel zu der Austrittsoberfläche (222) des Totalreflexionsprismas (20) platziert sind.

7. Elektronische Vorrichtung (1) nach Anspruch 6, wobei
das bewegliche Prisma (60) Folgendes enthält:
ein erstes bewegliches Prisma (61) und
ein zweites bewegliches Prisma (62) in Kontakt mit dem ersten beweglichen Prisma, Prisma (61),
eine geneigte Oberfläche (613) des ersten beweglichen Prismas (61) einer geneigten Oberfläche (513) des ersten festen Prismas (51) zugewandt ist und parallel zu dieser ist, und
eine geneigte Oberfläche (623) des zweiten beweglichen Prismas (62) einer geneigten Oberfläche (523) des zweiten festen Prismas (52) zugewandt ist und parallel zu dieser ist.

8. Elektronische Vorrichtung (1) nach Anspruch 6,
wobei das feste Prisma (50) und das bewegliche Prisma (60) einen identischen Brechungsindex aufweisen.

9. Elektronische Vorrichtung (1) nach Anspruch 3,
wobei das feste Prisma (50) eine dreieckige Säule mit einem gleichschenkligen dreieckigen Querschnitt ist.

10. Elektronische Vorrichtung (1) nach Anspruch 3,
wobei die Bewegungsvorrichtung (70) Folgendes enthält:
eine bewegliche Platte (71), auf der das bewegliche Prisma (60) angeordnet ist, und
einen Linearbewegungsmechanismus (72), der dazu konfiguriert ist, die bewegliche Platte (71) linear zu bewegen.

11. Elektronische Vorrichtung (1) nach Anspruch 1,
wobei der erste Bildausbilder (31) und der zweite Bildausbilder (32) jeweils eine digitale Mikrospiegelvorrichtung enthalten.

12. Elektronische Vorrichtung (1) nach Anspruch 1,
wobei der erste Bildausbilder (31) und der zweite Bildausbilder (32) auf einer gleichen Ebene angeordnet sind.

13. Elektronische Vorrichtung (1) nach Anspruch 1,
wobei die Projektionslinse (80) eine Weitwinkelprojektionslinse oder eine Ultraweitwinkelprojektionslinse enthält.

14. Elektronische Vorrichtung (1) nach Anspruch 1, ferner umfassend:
ein Gehäuse (3),
wobei die erste Lichtquelle (11), die zweite Lichtquelle (12), das Totalreflexionsprisma (20), das Strahlreduzierungsprisma (40) und die Projektionslinse (80) im Inneren des Gehäuses (3) angeordnet sind.

15. Elektronische Vorrichtung (1) nach Anspruch 14,
wobei das Gehäuse (3) ein Anzeigeteil (121) enthält, das dazu konfiguriert ist, eine Schaltfläche zum Einstellen des Strahlreduzierungsprismas (40) anzuzeigen.

## Revendications

1. Dispositif électronique (1) comprenant :
une première source lumineuse (11) conçue pour émettre une première lumière ;
une seconde source lumineuse (12) disposée parallèlement à la première source lumineuse et conçue pour émettre une seconde lumière ;
un prisme de réflexion totale interne (20) disposé devant la première source lumineuse et la seconde source lumineuse, et conçu pour réfracter la première lumière et la seconde lumière ;
un premier formateur d'image (31) disposé adjacent à une première surface (212) du prisme de réflexion totale interne (20), et configuré pour former la première lumière réfractée par le prisme de réflexion totale interne (20) en tant que première lumière d'image et réfléchir la première lumière d'image sur le prisme de réflexion totale interne (20) de sorte que le prisme de réflexion totale interne (20) émette la première lumière d'image ;
un second formateur d'image (32) disposé adjacent à la première surface (212) du prisme de réflexion totale interne (20) et parallèle au premier formateur d'image (31), et configuré pour former la seconde lumière réfractée par le prisme de réflexion totale interne (20) en tant que seconde lumière d'image et réfléchir la seconde lumière d'image vers le prisme de réflexion totale interne (20) de sorte que le prisme de réflexion totale interne (20) émette la seconde lumière d'image ;
un prisme réducteur de faisceau (40) configuré pour ajuster une distance entre la première lumière d'image et la seconde lumière d'image émise par le prisme de réflexion totale interne (20), et
une lentille de projection (80) conçue pour projeter la première lumière d'image et la seconde lumière d'image ajustées en distance sur un écran.

2. Dispositif électronique (1) selon la revendication 1,
dans lequel le prisme réducteur de faisceau (40) est configuré pour ajuster la distance entre la première lumière d'image et la seconde lumière d'image de sorte que la première lumière d'image et la seconde lumière d'image ajustées en distance forment l'une d'une image unique, d'une image large et d'images doubles sur l'écran.

3. Dispositif électronique (1) selon la revendication 1 ou 2,
dans lequel le prisme réducteur de faisceau (40) comprend :
un prisme fixe (50) adjacent à une surface de sortie (222) du prisme de réflexion totale interne (20),
un prisme mobile (60) espacé du prisme fixe, du prisme (50) et d'un dispositif mobile (70) conçu pour déplacer linéairement le prisme mobile (60) par rapport au prisme fixe. prisme (50).

4. Dispositif électronique (1) selon la revendication 3,
dans lequel le prisme mobile (60) est positionnable dans une première position dans laquelle la première lumière d'image et la seconde lumière d'image ajustées en distance forment une image unique sur l'écran, une deuxième position dans laquelle la première lumière d'image et la seconde lumière d'image ajustées en distance forment des images doubles sur l'écran, et une troisième position dans laquelle la première lumière d'image et la seconde lumière d'image ajustées en distance forment une image large sur l'écran.

5. Dispositif électronique (1) selon la revendication 4,
dans lequel la troisième position est située entre la première position et la deuxième position.

6. Dispositif électronique (1) selon la revendication 3, dans lequel
le prisme fixe (50) comprend :
un premier prisme fixe (51), et
un second prisme fixe (52) espacé du premier prisme fixe (51),
chacun du premier prisme fixe (51) et du second prisme fixe (52) est un pilier triangulaire à angle droit, et
le premier prisme fixe (51) et le second prisme fixe (52) sont agencés en une forme triangulaire isocèle avec un côté de base parallèle à la surface de sortie (222) du prisme de réflexion totale interne (20).

7. Dispositif électronique (1) selon la revendication 6, dans lequel
le prisme mobile (60) comprend :
un premier prisme mobile (61), et
un second prisme mobile (62) en contact avec le premier prisme mobile, prisme (61),
une surface inclinée (613) du premier prisme mobile (61) fait face, et est parallèle à, une surface inclinée (513) du premier prisme fixe (51), et
une surface inclinée (623) du second prisme mobile (62) fait face, et est parallèle à, une surface inclinée (523) du second prisme fixe (52).

8. Dispositif électronique (1) selon la revendication 6,
dans lequel le prisme fixe (50) et le prisme mobile (60) ont un indice de réfraction identique.

9. Dispositif électronique (1) selon la revendication 3,
dans lequel le prisme fixe (50) est un pilier triangulaire présentant une section transversale triangulaire isocèle.

10. Dispositif électronique (1) selon la revendication 3,
dans lequel le dispositif mobile (70) comprend :
une plaque mobile (71) sur laquelle le prisme mobile (60) est disposé, et
un mécanisme de déplacement linéaire (72) conçu pour déplacer linéairement la plaque mobile (71).

11. Dispositif électronique (1) selon la revendication 1,
dans lequel le premier formateur d'image (31) et le second formateur d'image (32) comprennent chacun un dispositif de micromiroir numérique.

12. Dispositif électronique (1) selon la revendication 1,
dans lequel le premier formateur d'image (31) et le second formateur d'image (32) sont disposés sur un même plan.

13. Dispositif électronique (1) selon la revendication 1,
dans lequel la lentille de projection (80) comprend une lentille de projection grand angle ou une lentille de projection ultra grand angle.

14. Dispositif électronique (1) selon la revendication 1, comprenant en outre :
un boîtier (3),
dans lequel la première source lumineuse (11), la seconde source lumineuse (12), le prisme de réflexion totale interne (20), le prisme réducteur de faisceau (40) et la lentille de projection (80) sont disposés à l'intérieur du boîtier (3).

15. Dispositif électronique (1) selon la revendication 14,
dans lequel le boîtier (3) comprend une partie d'affichage (121) configurée pour afficher un bouton pour ajuster le prisme réducteur de faisceau (40).
